# EUROPÄISCHE PATENTANMELDUNG

(11) **EP 0 994 329 A1**
(43) Veröffentlichungstag der Anmeldung: **19.04.2000**
(21) Anmeldenummer: 98119356.8
(22) Anmeldetag: 14.10.1998
(51) Int. Cl.: G01B 11/275, G01B 21/26

(54) **Kalibrierung von Anlagen zum Vermessen der Spur der Räder eines Fahrzeugs**

(71) Anmelder: VisiCon Automatisierungstechnik GmbH, 37130 Gleichen-Wöllmarshausen (DE)
(72) Erfinder: Bachmann, Uwe, 34355 Staufenberg (DE); Brunk, Wolfgang, 37130 Gleichen (DE); Nyga, Ralf, 37124 Rosdorf (DE); Schrammen, Peter, 34253 Lohfelden (DE)
(74) Vertreter: Patentanwälte Rehberg + Hüppe

(57) **Zusammenfassung**

Eine Vorrichtung (1) für die Kalibrierung von Anlagen zum Vermessen der Spur der Räder mindestens einer Achse eines Fahrzeugs, d.h. ein sogenannter Einrichtmeister, weist einen Rahmen (2) auf, an dem mindestens ein Paar von Rotationskörpern (5) derart drehbar gelagert ist, daß die sich drehenden Rotationskörper (5) einen bestimmten Spurwert festlegen. Dabei sind die beiden Rotationskörper (5) des Paars starr an einer gemeinsamen Starrachse (4) befestigt, die über zwei beabstandete Drehlager (3) an dem Rahmen (2) gelagert ist.

## Beschreibung

Die Erfindung bezieht sich auf eine Vorrichtung für die Kalibrierung von Anlagen zum Vermessen der Spur der Räder mindestens einer Achse eines Fahrzeugs, mit einem Rahmen, an dem mindestens ein Paar von Rotationskörpern derart drehbar gelagert ist, daß die sich drehenden Rotationskörper einen bestimmten Spurwert festlegen. Derartige Vorrichtungen werden auch als Einrichtmeister bezeichnet.

Anlagen zum Vermessen von Spur und Sturz der Räder der Achsen eines Fahrzeugs können mit Kontaktkörpern oder kontaktlos arbeiten. Die vorliegende Erfindung ist sowohl für die Kalibrierung von mit Kontaktkörpern als auch kontaktlos arbeitenden Anlagen zum Vermessen von Spur uns Sturz geeignet. Im folgenden wird zur Erläuterung der Erfindung mehrfach nur auf eine kontaktlos arbeitende Anlage zum Vermessen von Spur und Sturz eingegangen, wie sie aus der EP 280 941 A1 bekannt ist. Hierin ist aber keine Beschränkung der Erfindung auf das dort beschriebene oder allgemein auf optische Verfahren zu sehen.

Bei Anlagen zum Vermessen von Spur und Sturz der Räder der Achsen eines Fahrzeugs wird die Relativlage einer senkrecht zu der Drehachse des jeweiligen Rads verlaufenden Ebene zu einer dem Rad zugeordneten Meßanordnung bestimmt. Aus dieser Relativlage ist ein Rückschluß auf Spur und Sturz nur dann möglich, wenn die einzelnen den einzelnen Rädern zugeordneten Meßanordnungen relativ zueinander eine definierte Lage aufweisen. Für die Einstellung einer solchen definierten Relativlage bzw. für die Definition einer Istlage der Meßanordnungen wird eine Vorrichtung mit bestimmten Spur- und Sturzwerten verwendet, wie sie Gegenstand der vorliegenden Erfindung ist.

Einfache Vorrichtungen für die Kalibrierung von Anlagen zum Vermessen von Spur und Sturz der Räder der Achsen eines Fahrzeugs weisen einen Rahmen auf, an dem Räder in definierten Relativlagen durch jeweils drei Festkörper mit zylindermantelabschnittförmiger Oberfläche simuliert sind. Für Anlagen zum Vermessen von Spur und Sturz, die mit Kontaktkörpern arbeiten, ist ein solcher Einrichtmeister grundsätzlich gut geeignet, wenn auch seine eigene Vermessung durch drei Raumpunkte pro simuliertem Rad aufwendig ist. Kontaktlos arbeitende Anlagen arbeiten jedoch in der Regel mit Laserlicht, das beim Auftreffen auf die Festkörper ein Interferenzmuster in Form sogenannter Speckles zeigt. Der Einfluß der Speckles wird bei der tatsächlichen Vermessung von Spur und Sturz der Räder eines Fahrzeugs durch das dabei übliche Verdrehen der Räder herausgemittelt. Bei den Festkörpern reduziert der Einfluß der Speckles die Meßgenauigkeit jedoch dermaßen, daß eine genaue Kalibrierung von Anlagen zum Vermessen von Spur und Sturz nicht möglich ist.

Zur Beseitigung dieses Problems sind sogenannte "Rolling Master" bekannt. Hierbei handelt es sich um Vorrichtungen der eingangs beschriebenen Art, bei denen die Räder durch drehbar gelagerte Rotationskörper simuliert werden, wobei die sich drehenden, einzeln gelagerten Rotationskörper einen bestimmten Spurwert festlegen. Es erweist sich jedoch als sehr aufwendig, bei der bekannten Vorrichtung der eingangs beschriebenen Art die Werte von Spur- und Sturz der Achsen zu konservieren, wobei die großen Anforderungen an die Meßgenauigkeit der zu kalibrierenden Anlagen zu berücksichtigen ist.

Der Erfindung liegt die Aufgabe zugrunde, eine Vorrichtung für die Kalibrierung von Anlagen zum Vermessen mindestens einer Spur eines Fahrzeugs der eingangs beschriebenen Art aufzuzeigen, bei der die Einhaltung des bestimmten Spurwerts durch ein Konstruktionsprinzip gewährleistet wird.

Erfindungsgemäß wird diese Aufgabe dadurch gelöst, daß bei einer Vorrichtung für die Kalibrierung von Anlagen zum Vermessen der Spur der Räder mindestens einer Achse eines Fahrzeugs der eingangs beschriebenen Art die beiden Rotationskörper des Paars starr an einer gemeinsamen Starrachse befestigt sind, wobei die Starrachse über zwei beabstandete Drehlager an dem Rahmen gelagert ist. Eine Starrachse als Verbindung der beiden Rotationskörper des Paars sorgt per definitionem dafür, daß die beiden Rotationskörper eine Gesamtspur mit einem Spurwinkel null definieren. Gleichzeitig ist der Sturz der beiden durch die Rotationskörper simulierten Räder per definitionem vom Betrag her gleich und weist unterschiedliche Vorzeichen auf. Der ohne weiteres sehr groß ausgebildete Abstand der beiden Drehlager für die Starrachse sorgt zudem für eine sehr gute Stabilität der Lage der Starrachse relativ zu dem Rahmen der Vorrichtung. Dabei ist jeder Schlag der Rotationskörper und auch der Starrachse, solange sie sich nicht während einer ihrer Umdrehungen verformt und ihre Lager gegenüber dem Rahmen ortsfest bleiben, für die Definition der Gesamtspur null und des betragsgleichen Sturzes durch die Rotationskörper unbeachtlich. All diese Fehler mitteln sich heraus, sobald die Vermessung von Spur und Sturz bei sich um eine volle Umdrehung drehenden Rotationskörpern vorgenommen wird.

Vorzugsweise sind die Drehlager für die Starrachse jeweils auf der dem anderen Rotationskörper abgewandten Seite eines Rotationskörpers angeordnet, wobei die Rotationskörper geschützt innerhalb des Rahmens liegen. Bei dieser Anordnung weisen die Drehlager ihren maximalen Abstand zueinander auf. Bei den Drehlagern vorhandenes absolutes Spiel wirkt sich damit nur in vernachlässigbar kleinen Winkelfehlern auf die Relativlage der Starrachse gegenüber dem Rahmen aus.

Für das Verdrehen der Starrachse kann ein sich an dem Rahmen abstützender Drehantrieb vorgesehen sein. Bei dem Drehantrieb kann es sich um einen Drehstrommotor handeln, wobei zwischen den Drehstrommotor und der Starrachse ein Zahnriemen geschaltet ist. Bei der Ansteuerung des Drehstrommotors kann ein Kontrollsignal anfallen, das es ermöglicht festzustellen, wann sich die Rotationskörper genau einmal mit der Starrachse gedreht haben, um genau über diese eine oder ein ganzes Vielfaches von Umdrehungen das Vermessen von Spur und Sturz beim Kalibrieren vorzunehmen. Das Überwachen der vollständigen Umdrehungen kann aber auch dadurch erfolgen, daß die Starrachse oder einer der Rotationskörper des Paars eine mit dieser/diesem umlaufende Marke aufweist, wobei an dem Rahmen ein der Marke zugeordneter Sensor vorgesehen ist, um zu detektieren, daß sich die Rotationskörper um eine volle Umdrehung gedreht haben.

Zur speziellen Abstimmung auf Anlagen zum Vermessen von Spur und Sturz, die kontaktlos auf der Basis sogenannter Lichtschnitttechnik arbeiten, können die Rotationskörper jeweils eine quer zu der Starrachse verlaufende ebene Stirnfläche aufweisen, in der eine ringförmig um die Starrachse umlaufende Nut oder auf der ein um die Starrachse umlaufender Wulst vorgesehen ist. Der tiefste Punkt der Nut bzw. der höchste Punkt des Wulstes definieren in jedem Lichtschnitt einen in radialer Richtung um die Drehachse des Rotationskörpers äquivalenten Punkt. Die ebene Stirnfläche ermöglicht es, die Winkelkalibrierung der den Rädern einer Achse zugeordneten Meßanordnungen einer Anlage zum Vermessen von Spur und Sturz so vorzunehmen, daß sie koaxial ausgerichtet sind und damit insbesondere unabhängig von der jeweiligen Radgröße richtige Meßwerte liefern. Anhand eines festgestellten Winkelfehlers kann eine mechanische aber auch eine rechnerische Winkelkorrektur erfolgen.

Um die genaue Lage des tiefsten Punkts der Nut bzw. des höchsten Punkts des Wulstes aus dem Bild eines Lichtschnitts möglichst leicht ermitteln zu können, kann die Oberfläche der Nut bzw. des Wulstes in einem Schnitt in Richtung der Starrachse aus mindestens zwei unter einem Winkel aufeinander stoßenden geraden Abschnitten zusammengesetzt sein. Entlang dieser Geradenabschnitte kann dann sehr genau auf den Schnittpunkt der Geradenabschnitte extrapoliert werden.

Vorzugsweise sind die Rotationskörper der neuen Vorrichtung nicht vorgesehen, auf den Laufrollen einer Anlage zum Vermessen von Spur und Sturz, die üblicherweise die Räder eines zu vermessenden Fahrzeugs abstützen, aufzuliegen. Alle an den Rollen und ihrer Lagerung anhaftenden Fehler würden dann auf die Rotationskörper übertragen, wobei eine ortsfeste Lage der Starrachse gegenüber den Meßanordnungen nicht mehr zu realisieren wäre. Der Rahmen weist daher vorzugsweise vielmehr Aufstandfüße auf, so daß die Rotationskörper mit der Starrachse frei verdrehbar sind. An den Aufstandfüßen kann der Rahmen mit um horizontale Achsen schwenkbar gelagerte Aufstandkufen versehen sein, um sich an die Anordnung der Laufrollen automatisch anzupassen.

Vorzugsweise ist die neue Vorrichtung so ausgebildet, daß allen Meßanordnungen einer Anlage zum Vermessen von Spur und Sturz der Räder eines Fahrzeugs Rotationskörper zugeordnet sind, die über Starrachsen an dem Rahmen gelagert sind. Das heißt, daß im Regelfall zwei Paare von Rotationskörpern über zwei beabstandete Starrachsen drehbar an dem Rahmen gelagert sind.

Dabei müssen die beiden Starrachsen nicht notwendigerweise exakt parallel zueinander und ohne axialen Versatz hintereinander an dem Rahmen ausgerichtet sein. Für die vollständige Kalibrierung von Anlagen zum Bestimmen von Spur und Sturz ist es ausreichend, wenn die beiden Starrachsen eine definierte Relativlage zueinander aufweisen. Das heißt, eine erfindungsgemäße Vorrichtung muß nur nach ihrer Herstellung genau vermessen bzw. während ihrer Verwendung regelmäßig nachvermessen werden, um ihre Funktion voll erfüllen zu können. Für die vollständige Vermessung reicht es dabei aus, wenn für jede Starrachse zwei Raumpunkte vermessen werden, d. h. vorzugsweise die Raumlage der zwei Drehlager für die jeweilige Starrachse. Hieraus sind dann die Relativlagen der beiden Starrachsen, d.h. ihre relativen Laufrichtungen, ebenso wie der Sturz der Starrachsen vollständig bestimmbar. Spur und Sturz der einzelnen durch die Rotationskörper simulierten Räder müssen bei der neuen Vorrichtung hingegen niemals vermessen werden, da per definitionem die Gesamtspur jeder Starrachsen null ist und der Sturz der Rotationskörper jedes Paars den gleichen Betrag aufweist.

Die Erfindung wird im folgenden anhand eines Ausführungsbeispiels näher erläutert und beschrieben. Dabei zeigt
- Figur 1: eine Draufsicht auf die Vorrichtung von oben,
- Figur 2: ein Detail der Vorrichtung gemäß Figur 1 in der Seitenansicht,
- Figur 3: das Detail gemäß Figur 2 in der Draufsicht von oben mit Teilen einer Meßanordnung zur Bestimmung von Spur und Sturz,
- Figur 4: einen Längsschnitt durch einen Rotationskörper der Vorrichtung gemäß den Figuren 1 bis 3 und
- Figur 5: ein Detail des Längsschnitts gemäß Figur 4.

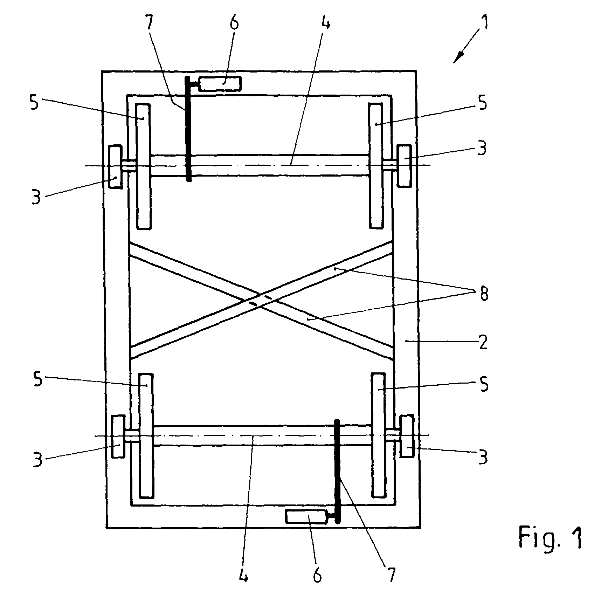

Die in Figur 1 dargestellte Vorrichtung 1 ist für die Kalibrierung von Anlagen zum Vermessen von Spur und Sturz der Räder von Fahrzeugen vorgesehen und wird auch als Einrichtmeister für diese Anlagen bezeichnet. Die Vorrichtung 1 weist einen starr ausgebildeten Rahmen 2 auf. An dem Rahmen 2 sind über Drehlager 3 zwei Starrachsen 4 endseitig gelagert. Innerhalb des Rahmens 2 ist vor den Drehlagern 3 jeweils ein Rotationskörper 5 drehfest an den Starrachsen 4 befestigt. Die drehfest an einer Starrachse 4 befestigten Rotationskörper 5 simulieren die Räder einer Achse eines Fahrzeugs, deren Spur und Sturz mit den zu kalibrierenden Anlagen zu vermessen sind. Dabei ist per definitionem der Spurwinkel der Gesamtspur der Rotationskörpern 5 auf einer Starrachse 4 gleich null, und der Sturz der beiden Rotationskörper weist per definitionem den gleichen Betrag auf. Diese Meßergebnisse für die Gesamtspur und den Sturz der Rotationskörper 5 auf einer Starrachse müssen sich auch unabhängig von allen Ungenauigkeiten der Rotationskörper 5 und ihrer Anbringung auf der Starrachse 4 einstellen, wenn sie um eine volle Umdrehung verdreht werden, wobei sich sämtliche Ungenauigkeiten und Orientierungsfehler der Rotationskörper 5 und der Starrachse 4, so auch jeder Schlag der Starrachse 4, herausmitteln. Zum Verdrehen der beiden Starrachsen 4 sind zwei Drehantriebe 6 vorgesehen, die sich an dem Rahmen 2 abstützen und über Zahnriemen 7 an den Starrachsen 4 angreifen. Die Drehantriebe 6 sind so ansteuerbar, daß die Starrachsen 4 zusammen mit den Rotationskörpern 5 jeweils eine ganze Anzahl von Umdrehungen zurücklegen, dies kann durch eine hier nicht dargestellte Sensoranordnung zusätzlich überwacht werden. Die Relativlagen der beiden Starrachsen 4 werden durch die Relativlagen der Drehlager 3 an dem Rahmen 2 vollständig bestimmt. Das heißt, wenn die Drehlager 3 ortsfest an dem Rahmen 2 gelagert sind und ihre relative Anordnung zueinander genau bekannt ist, simuliert die Vorrichtung 1 gemäß Figur 1 ein Fahrwerk mit exakt definierten Spur- und Sturzwerten. Ebenso reicht es für ein Nachmessen der Vorrichtung 1 gemäß Figur 1 aus, die Relativanordnung der Drehlager 3 nachzumessen. Daß sich diese Relativlage nicht während der Verwendung der Vorrichtung 1 ändert, ist durch eine ausreichend steife Auslegung des Rahmens 2 sicherstellbar. Diese wird in Figur 1 durch Versteifungsstreben 8 angedeutet.

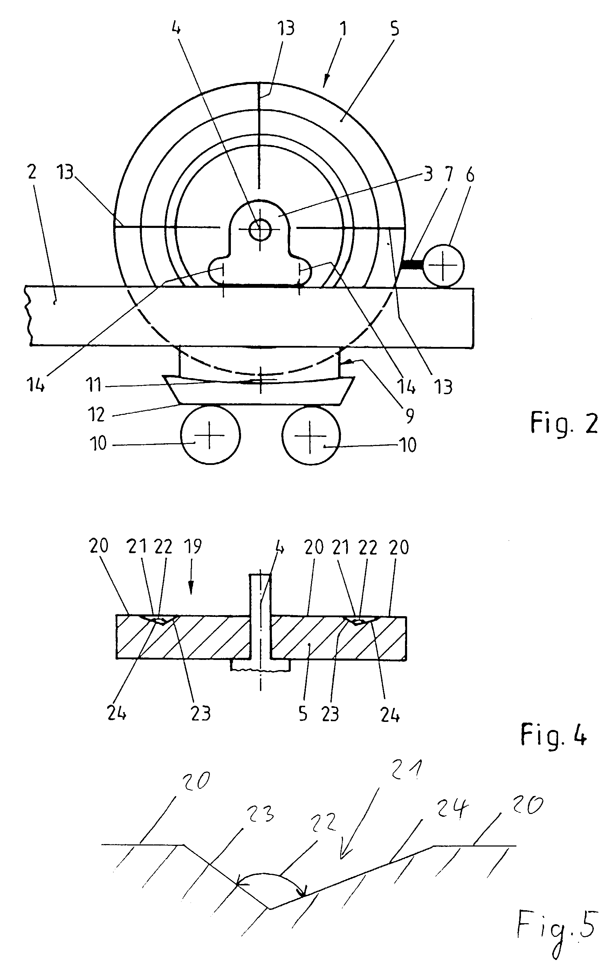

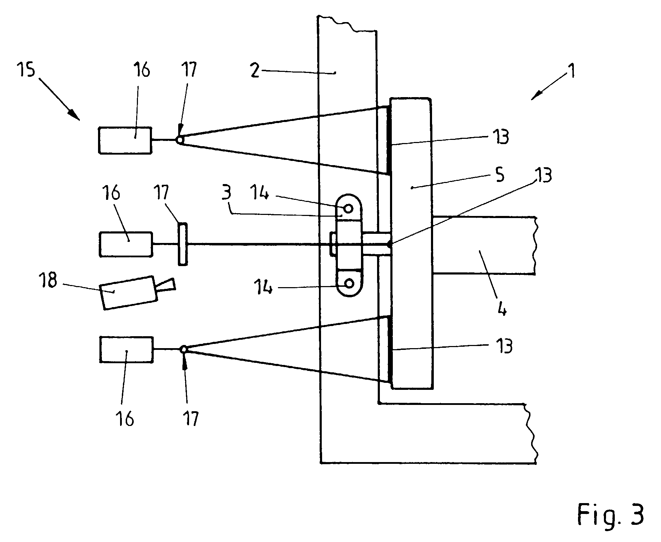

Figur 2 zeigt, wie der Rahmen 2 unterhalb eines Drehlagers 3 über einen Aufstandfuß 9 auf zwei Laufrollen 10 aufsteht, die bei einer Anlage zum Vermessen von Spur und Sturz der Räder eines Fahrzeugs zum Abstützen und Verdrehen eines Rads dienen. Der dem Rad entsprechende Rotationskörper 5 läuft jedoch, ohne mit den Laufrollen 10 in Kontakt zu kommen, frei um, damit die Vorrichtung 1 nicht durch Ausrichtungs- und Rundlauffehler der Laufrollen 10 beeinträchtigt wird. Der Aufstandfuß 9 weist in seiner Unterseite eine um eine horizontale Achse 11 schwenkbar gelagerte Aufstandkufe 12 auf, mit der er auch dann auf den Laufrollen 10 sicher aufsteht, wenn deren obere Mantellinien nicht exakt in einer horizontalen Ebene verlaufen.

In Figur 2 ist weiterhin eine Vermessung von Spur und Sturz an der Vorrichtung 1 durch auf den Rotationskörper 5 aufprojizierte Lichtschnitte 13 angedeutet. Die Lichtschnitte 13 verlaufen etwa radial zu der Starrachse 4 und schneiden dabei verschiedene in radialer Richtung hintereinander angeordnete Oberflächenbereiche des Rotationskörpers 5, die im Zusammenhang mit Figur 4 näher erläutert werden werden. Zu den Drehlagern 3 ist in Figur 2 angedeutet, daß sie durch zwei Schraubverbindungen 14 an den Rahmen 2 aufgeschraubt sind.

Figur 3 zeigt neben den Details gemäß Figur 2 Teile einer Meßanordnung 15, die innerhalb einer Anlage zur Bestimmung von Spur und Sturz der Räder eines Fahrzeugs einem Rad des Fahrzeugs zugeordnet ist. Dabei sind drei Laser 16 mit nachgeschalteten Lichtschnittoptiken 17 vorgesehen, um die Lichtschnitte 13 auf den Rotationskörper 5 zu projizieren. Zu dem mittleren Laser 6 ist auch noch eine Videokamera 18 wiedergegeben, die den zugehörigen Lichtschnitt 13 unter einem Winkel betrachtet, so daß eine feste Beziehung zwischen einem Punkt des Lichtschnitts in dem Bild der Videokamera 18 und dessen räumlicher Lage besteht. Auch den äußeren Lasern 16 sind Videokameras 18 zugeordnet, die jedoch unter den Lasern 16 liegen und von diesen verdeckt werden. Aus den drei Bildern der drei Videokameras 18 ist die räumliche Lage von drei äquivalenten Punkten des Rotationskörpers 5 bestimmbar. Hieraus ergibt sich die Raumlage einer senkrecht zur Drehachse des Rotationskörpers 5 verlaufenden Ebene und damit der Wert von Spur und Sturz dieser Drehachse. Da diese Werte bei der Vorrichtung 1 genau festliegen, sind anfänglich abweichende Meßwerte bei der Meßanordnung 15 für eine Korrektur zu verwenden.

Figur 4 zeigt einen Schnitt durch einen Rotationskörper 5, aus dem eine Kontur seiner nach außen weisenden Stirnseite 19 hervorgeht. Die Stirnseite 19 wird im wesentlichen von einer ebenen Stirnfläche 20 ausgebildet, die senkrecht zu der Starrachse 4 verläuft. In der ebenen Stirnfläche 20 ist eine Nut 21 vorgesehen, die um die Starrachse 4 ringförmig umläuft. In dem in Figur 5 vergrößert wiedergegebenen Schnitt durch die Nut 21 ist die Oberfläche der Nut 21 aus zwei unter einem Winkel 22 aufeinander stoßenden Geradenabschnitten 23 und 24 zusammengesetzt. In einem Lichtschnitt 13 über die Stirnseite 19 finden sich demgemäß der ebenen Stirnfläche 20 entsprechende Geradenabschnitte und die Geradenabschnitte 23 und 24. Durch Extrapolation der Geradenabschnitte 23 und 24 ist ihr Schnittpunkt als einzelner Punkt des Lichtschnitts extrahierbar, der für alle drei Lichtschnitte 13 gemäß den Figuren 2 und 3 eine äuquivalente radiale Lage aufweist. Aus den der ebenen Stirnfläche 20 entsprechenden Geradenabschnitt bzw. deren Verlauf in dem Bild der Videokameras 18 kann die Winkellage der Meßanordnung daraufhin überprüft werden, ob sie einen Fehler aufweist, der beispielsweise bei unterschiedlichen Raddurchmessern zu einem Meßartefakt beim Vermessen von Spur und Sturz führt. Statt der Nut 21 könnte auch ein entsprechend ausgebildeter Wulst über die ebene Stirnfläche 20 überstehen. Ein solcher Wulst könnte auch zur Anlage von Kontaktkörpern einer mit Kontaktkörpern arbeitenden Anlage zum Vermessen von Spur und Sturz dienen. Jegliche Abmessungsfehler bei den Kontaktkörpern 5, insbesondere ein Schlag, Unrundheiten und dgl. beeinträchtigen das Kalibrierungsergebnis mit der Vorrichtung 1 nicht, solange bei der Kalibrierung über eine ganze Anzahl von Umdrehungen der Rotationskörper gemittelt wird.

### BEZUGSZEICHENLISTE

- 1 -: Vorrichtung
- 2 -: Rahmen
- 3 -: Drehlager
- 4 -: Starrachse
- 5 -: Rotationskörper
- 6 -: Drehantrieb
- 7 -: Zahnriemen
- 8 -: Versteifungsstrebe
- 9 -: Aufstandfuß
- 10 -: Laufrolle

- 11 -: Schwenkachse
- 12 -: Aufstandkufe
- 13 -: Lichtschnitt
- 14 -: Schraubverbindung
- 15 -: Meßanordnung
- 16 -: Laser
- 17 -: Lichtschnittoptik
- 18 -: Videokamera
- 19 -: Stirnseite
- 20 -: Stirnfläche

- 21 -: Nut
- 22 -: Winkel
- 23 -: Geradenabschnitt
- 24 -: Geradenabschnitt

## Patentansprüche

1. Vorrichtung für die Kalibrierung von Anlagen zum Vermessen der Spur der Räder mindestens einer Achse eines Fahrzeugs, mit einem Rahmen, an dem mindestens ein Paar von Rotationskörpern derart drehbar gelagert ist, daß die sich drehenden Rotationskörper einen bestimmten Spurwert festlegen, **dadurch gekennzeichnet,** daß die beiden Rotationskörper (5) des Paars starr an einer gemeinsamen Starrachse (4) befestigt sind, wobei die Starrachse (4) über zwei beabstandete Drehlager (3) an dem Rahmen (2) gelagert ist.

2. Vorrichtung nach Anspruch 1, **dadurch gekennzeichnet,** daß die Drehlager (3) jeweils auf der dem anderen Rotationskörper (5) abgewandten Seite eines Rotationskörpers (5) angeordnet sind.

3. Vorrichtung nach Anspruch 1 oder 2, **dadurch gekennzeichnet,** daß sich ein Drehantrieb (6) zum Verdrehen der Starrachse (4) an dem Rahmen (2) abstützt.

4. Vorrichtung nach Anspruch 3, **dadurch gekennzeichnet,** daß der Drehantrieb (6) ein Drehstrommotor ist und daß zwischen den Drehstrommotor und die Starrachse (4) ein Zahnriemen (7) geschaltet ist.

5. Vorrichtung nach einem der Ansprüche 1 bis 4, **dadurch gekennzeichnet,** daß die Starrachse (4) oder einer der Rotationskörper (5) des Paars eine mit dieser/diesem umlaufende Marke aufweist und daß am Rahmen (2) ein der Marke zugeordneter Sensor vorgesehen ist, um zu detektieren, daß sich die Rotationskörper (5) um eine volle Umdrehung gedreht haben.

6. Vorrichtung nach einem der Ansprüche 1 bis 5, **dadurch gekennzeichnet,** daß die Rotationskörper (5) jeweils eine quer zu der Starrachse (4) verlaufende ebene Stirnfläche (20) aufweisen, in der eine ringförmig um die Starrachse (4) umlaufende Nut (21) oder auf der ein um die Starrachse umlaufender Wulst vorgesehen ist.

7. Vorrichtung nach Anspruch 6, **dadurch gekennzeichnet,** daß die Oberfläche der Nut (21) bzw. des Wulstes in einem Schnitt in Richtung der Starrachse (4) aus mindestens zwei unter einem Winkel (22) aufeinanderstoßenden Geradenabschnitten (23, 24) zusammengesetzt ist.

8. Vorrichtung nach einem der Ansprüche 1 bis 7, **dadurch gekennzeichnet,** daß der Rahmen (2) Aufstandfüße (9) aufweist, so daß die Rotationskörper (5) mit der Starrachse frei verdrehbar sind.

9. Vorrichtung nach einem der Ansprüche 1 bis 8, **dadurch gekennzeichnet,** daß an dem Rahmen (2) zwei Paare von Rotationskörpern (5) über zwei beabstandete Starrachsen (4) drehbar gelagert sind.

10. Vorrichtung nach Anspruch 9, **dadurch gekennzeichnet,** daß die beiden Starrachsen (4) eine definierte Relativlage zueinander aufweisen.
